# EUROPÄISCHE PATENTSCHRIFT

(11) **EP 1 555 861 B1**
(45) Veröffentlichungstag und Bekanntmachung des Hinweises auf die Patenterteilung: **09.04.2008**
(21) Anmeldenummer: 04028023.2
(22) Anmeldetag: 25.11.2004
(51) Int. Cl.: H05B 41/282, H05B 37/02, H02J 13/00

(54) **Steuerung von Betriebsgeräten für Leuchtmittel mittels Schaltmodulation eines DC-Busses**
Control of lighting apparatusses through switching modulation on a DC-bus
Commande d' appareils d' éclairage par modulation sur un bus à courant continu

(30) Priorität: 14.01.2004 DE 102004002017
(43) Veröffentlichungstag der Anmeldung: 20.07.2005
(60) Teilanmeldung: 07109703.4
(73) Patentinhaber: TridonicAtco GmbH & Co. KG, 6851 Dornbirn (AT)
(72) Erfinder: Huber, Markus, 8854 Siebnen (CH); Zudrell-Koch, Stefan, 6850 Dornbirn (AT)
(74) Vertreter: Rupp, Christian

(56) Entgegenhaltungen:
- EP-A- 1 220 581
- EP-A- 1 244 337
- WO-A-92/16041
- WO-A-94/27419
- DE-A- 19 502 772
- DE-A1- 4 413 569
- FR-A- 2 804 572
- US-A- 5 539 388
- US-A- 5 654 609

## Beschreibung

Die vorliegende Erfindung bezieht sich auf die Steuerung von Leuchtmittel-Betriebsgeräten mittels eines DC-Busses am Ausgang einer Zentraleinheit.

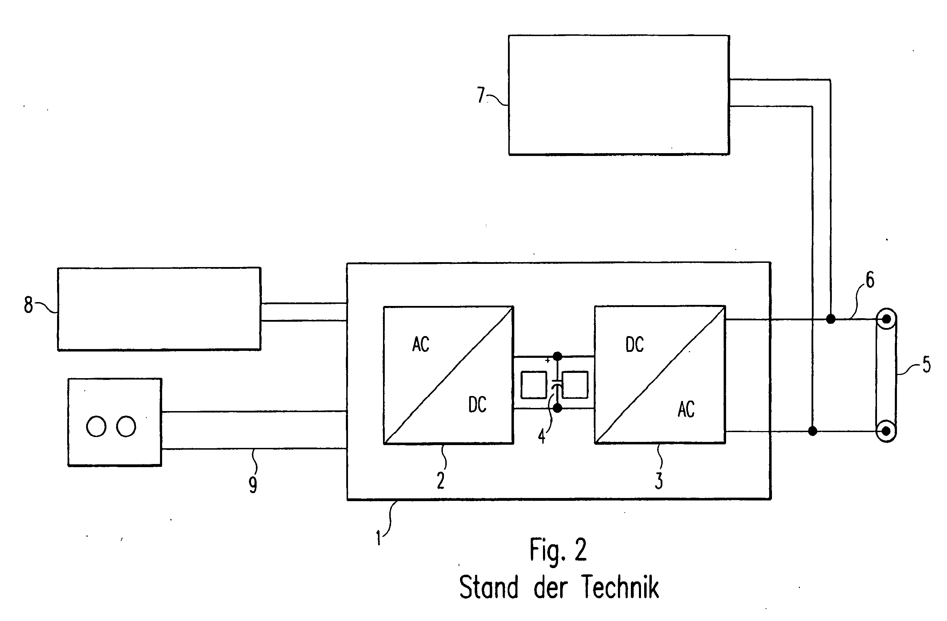

Dabei geht die Erfindung von einem in Fig. 2 schematisch dargestellten System aus. In diesem Beispiel ist das Leuchtmittel eine Gasentladungslampe 5, die von einem elektrischen Vorschaltgerät (EVG) 1 als Betriebsgerät angesteuert wird. In üblicher Weise weist dieses EVG 1 einen Gleichrichter mit Leistungsfaktor-Korrekturschaltung (PFC, Power Factor Correction) 2, einen Elektrolyt-Speicherkondensator 4 sowie einen HF-Wechselrichter 3 auf, der wiederum mittels über seinen Ausgangskreis 6 die Gasentladungslampe 5 ansteuert. Die Gleichspannung (Busspannung) liegt somit nur innerhalb des EVGs vor.

Zusätzlich kann eine Notbeleuchtungssteuerung 7 vorgesehen sein.

Der Gleichrichter 2 in dem EVG 1 wird üblicherweise mit Wechselspannung 9, beispielsweise Netzspannung, versorgt.

Gleichzeitig ist es bekannt, das EVG 1 über eine Digital- oder Analogbussteuerung 8 anzusteuern, um somit die Lampe 5 zu starten, zu dimmen oder auszuschalten. Festzuhalten ist, dass bei diesem Stand der Technik in jedem Lampenbetriebsgerät (EVG 1) ein eigener Gleichrichter 2 mit PFC-Schaltung vorgesehen ist. Eine derartige PFC-Schaltung verringert bekanntlich störende Oberwellen im Eingangsstrom. Andererseits stellen diese lokal in jedem EVG 1 vorgesehenen Wechselrichter mit PFC 2 einen beträchtlichen Kostenfaktor dar, der den Trend zu äußerst kostengünstig gefertigten EVG's stark eingrenzt.

Ausgangspunkt und Aufgabe für die vorliegende Erfindung ist es dementsprechend, eine Ansteuerung für Leuchtmittel-Betriebsgeräte vorzuschlagen, die eine kostengünstigere Fertigung von Betriebsgeräten ermöglicht.

Zentraler Punkt der Erfindung ist es dabei, dass die Gleichrichtereinheit nicht mehr lokal in jedem Betriebsgerät, sondern zentral für mehrere Betriebsgeräte vorgesehen ist. Die Verbindung zwischen dieser Zentrale und den einzelnen Betriebsgeräten erfolgt erfindungsgemäß über wenigstens einen DC-Ausgangskreis.

Gleichzeitig soll trotz der zentralen Ausgestaltung eine flexible und auf die Bedürfnisse der angeschlossenen Betriebsgeräte angepasste Versorgung ermöglicht werden.

Aus der FR-A-2804572 ist ein System zur zentralen Steuerung von Betriebsgeräten mittels einer DC-Versorgung bekannt.

Die oben angeführte Aufgabe wird durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der vorliegenden Erfindung ist ein System zur zentralen Steuerung von Betriebsgeräten für Leuchtmittel vorgesehen, das eine zentrale mit Wechselspannung versorgte Gleichrichtereinheit aufweist. Weiterhin ist wenigstens ein Betriebsgerät für Leuchtmittel vorgesehen, das mit der Gleichrichtereinheit mittels eines DC-Bus spannungsmäßig versorgt ist. Die zentrale Gleichrichtereinheit weist dabei eine Funktion zum Schalten des DC-Busses auf wenigstens zwei unterschiedliche Werte auf.

Das Schalten des Pegels des DC-Busses erfolgt dabei in diskreten Stufen und wird durch eine Logikeinheit in dem Betriebsgerät als digitale Steuerinformation von der zentralen Gleichrichtereinheit interpretiert.

Durch Änderung der Busspannung kann auch analog ein Dimmen der an das Betriebsgerät angeschlossenen Leuchtmittel erzielt werden.

Grundsätzlich kann der Betrag der DC-Busspannung und/oder die Polung (Vorzeichen) der DC-Busspannung schaltbar sein.

Durch die Phasenlage und/oder die Frequenz des Schaltens kann ein digitaler Steuerbefehl hinsichtlich seiner Bedeutung kodiert sein.

Andererseits kann auch die Adressierung eines Steuerbefehls an ein oder eine Gruppe von Betriebsgeräten durch die Phasenlage und/oder die Frequenz des Schaltens kodiert sein. Somit können Steuerbefehle bestimmter Bedeutung eindeutig an ein bzw. eine vorbestimmte Gruppe an Betriebsgeräten adressiert werden.

Die DC-Busspannung kann ein- und ausschaltbar sein.

Eine Rücksignalisierung von einem Betriebsgerät zu der zentralen Gleichrichtereinheit kann durch gezielte Änderung des Lastverhaltens des Betriebsgeräts erzielbar sein.

Das Betriebsgerät kann einen schaltbaren Lastkreis aufweisen, um somit durch Änderung des Lastverhaltens eine Rücksignalisierung zu der zentralen Gleichrichtereinheit zu erreichen.

Die zentrale Gleichrichtereinheit kann eine Vollbrückenschaltung aufweisen, um DC-Busspannungen unterschiedlicher Polung bereitzustellen.

Das Betriebsgerät kann beispielsweise ein elektronisches Vorschaltgerät (EVG) für Gasentladungslampen sein.

Die zentrale Gleichrichtereinheit kann auch eine Leistungsfaktor-Korrekturschaltung (PFC, Power Factor Correction Circuit) aufweisen.

Gemäß einer Weiterbildung der vorliegenden Erfindung ist ein System zur zentralen Steuerung von Betriebsgeräten für Leuchtmittel vorgesehen, bei dem die zentrale Gleichrichtereinheit eine Schaltung zur Überwachung des Zustands des DC-Busses aufweist. Diese Überwachungsschaltung wertet definierte Last-Zustandsänderungen des DC-Busses (ausgelöst durch die Veränderung des Lastverhaltens wenigstens eines Betriebsgeräts) als Rücksignalisierung vorbestimmter Bedeutung von einem Betriebsgerät aus.

Dabei kann die Herkunfts-Identifikation und/oder die Art der Rücksignalisierung (Bedeutung des Signalisierungsbefehls) durch die Phasenlage und/oder die Frequenz der Last-Zustandsänderungen des DC-Busses kodiert sein.

Gemäß einem weiteren Aspekt der vorliegenden Erfindung ist ein Verfahren zur zentralen Steuerung von Betriebsgeräten für Leuchtmittel unter Verwendung einer zentralen Gleichrichtereinheit, eines Betriebsgeräts für Leuchtmittel und eines DC-Busses zur Versorgung des Betriebsgeräts für Leuchtmittel ausgehend von der Gleichrichtereinheit vorgesehen. Die zentrale Gleichrichtereinheit schaltet dabei den Wert der Spannung des DC-Busses auf einen von wenigstens zwei unterschiedlichen, verfügbaren Werten.

Gemäß einer Weiterbildung des Verfahrens der vorliegenden Erfindung ist ein Verfahren zur zentralen Steuerung von Betriebsgeräten für Leuchtmittel vorgesehen, gemäß dem die zentrale Gleichrichtereinheit den Zustand des DC-Busses überwacht, um definierte Last-Zustandsänderungen des DC-Busses als Rücksignalisierung von einem Betriebsgerät auszuwerten.

Schließlich bezieht sich die vorliegende Erfindung auch noch auf ein Computersoftware-Programmprodukt, das ein Verfahren der angeführten Art unterstützt, wenn es auf einen Prozessor in einem Beleuchtungssteuersystem läuft.

Weitere Merkmale, Vorteile und Eigenschaften der vorliegenden Erfindung sollen nunmehr unter Bezugnahme auf die Figuren der beigefügten Zeichnungen sowie die folgende detaillierte Beschreibung eines Ausführungsbeispieles näher erläutert werden.
- Fig. 1: zeigt eine schematische Ansicht eines erfindungsgemäßen Steuersystems für Leuchtmittel-Betriebsgeräte mit zentraler Gleichrichter/PFC-Einheit und DC-Ausgangskreis,
- Fig. 2: zeigt eine aus dem Stand der Technik bekannte Betriebsmittel-Ausgestaltung für Gasentladungslampen,
- Fig. 3: zeigt eine schematische Ausführung eines erfindungsgemäßen Steuersystems für Betriebsgeräte für Leuchtmittel mit schaltbarem DC-Bus,
- Fig. 4a und 4b: zeigen einen schematischen Schaltplan bzw. ein Flowchart zur bipolaren Schaltung des DC-Busses, und
- Fig. 5: zeigt ein Ausführungsbeispiel, bei dem der Lastkreis eines an einem DC-Busses angeschlossenen Betriebsgeräts für Leuchtmittel schaltbar ist, um somit eine Rücksignalisierung von dem Betriebsgerät hin zu einer zentralen Gleichrichtereinheit zu ermöglichen.

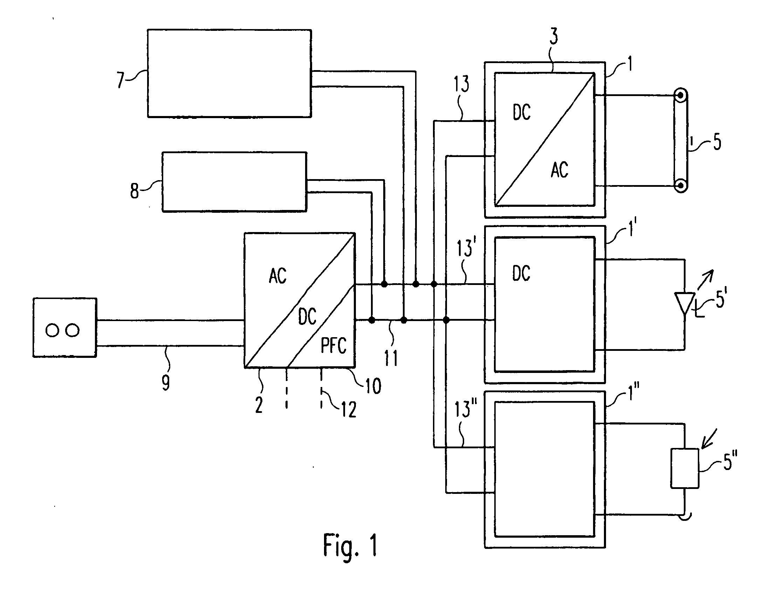

Wie in Fig. 1 gezeigt, ist eine Zentraleinheit, aufweisend beispielsweise einen Gleichrichter 2 sowie ggf. auch eine Leistungsfaktor-Korrekturschaltung (PFC) 10, gemeinsam für mehrere Leuchtmittel-Betriebsgeräte 1, 1', 1" vorgesehen. Die Zentraleinheit 2 wird mit (Netz-)Wechselspannung 9 versorgt. Die Zentraleinheit 2, 10 kann im übrigen auch räumlich von den Betriebsgeräten getrennt sein und bspw. zentral für einen Raum, eine Etage oder gar ein Gebäude in einem Schaltschrank etc. angeordnet werden.

Wie in Fig. 1 schematisch angedeutet, können die verschiedenen Leuchtmittel-Betriebsgeräte 1, 1', 1" verschiedenste Leuchtmittel, wie beispielsweise eine Gasentladungslampe 5, Leuchtdioden 5', etc. ansteuern. Die Leuchtmittel selbst können dabei mit DC- oder mit AC-Spannung betrieben werden, wobei in letzerem Fall in dem zugehörigen Betriebsgerät ein Wechselrichter vorgesehen ist.

Weiterhin können an einen externen DC-Ausgangskreis 11 der Zentraleinheit auch andere (bspw. passive) lichttechnische oder gebäudetechnische Einrichtungen, wie beispielsweise ein Lichtsensor 5" oder ein Bewegungsmelder (nicht dargestellt) angeschlossen sein.

Je nach Natur der angeschlossenen Leuchtmittel 5, 5' bzw. Sensoren 5" sind die Betriebsgeräte 1, 1', 1" unterschiedlich ausgebildet. Für den Fall, dass eine Gasentladungslampe 5 angesteuert werden soll, ist das entsprechende Betriebsgerät 3 bspw. als elektronisches Vorschaltgerät (EVG) u.a. mit einem Wechselrichter ausgebildet. Die Betriebsgeräte können in diesem Fall auch als "Ausgangs-Konverter" bezeichnet werden.

Die Spannungsversorgung der Betriebsgeräte und Leuchtmittel und optional auch die uni- oder bidirektionale Kommunikation zwischen der Zentraleinheit und den lokalen Betriebsgeräten 1, 1', 1" erfolgt über den wenigstens einen (externen) DC-Ausgangskreis 11, 12. "Extern" ist dabei im Gegensatz zu internen DC-Bussen zu verstehen, wie sie bspw. bei bekannten elektronischen Vorschaltgeräten vorliegen.

Wie in Fig. 1 schematisch dargestellt kann dabei ein Ausgangskreis 11 busartig ausgestaltet sein, so dass ausgehend von diesem zentralen gemeinsamen Bus 11 die verschiedenen Betriebsgeräte 1, 1', 1" über Stichleitungen 13, 13', 13'' versorgt werden. Alternativ oder zusätzlich können für einzelne Betriebsgeräte bzw. gemeinsam versorgte Gruppen an Betriebsgeräten individuelle Ausgangskreise 12 vorgesehen sein.

Dieser DC-Ausgangskreis hat den Vorteil, dass er im Vergleich zu entsprechenden AC-Kreisen weniger anfällig gegenüber parasitären Effekten ist.

Festzuhalten ist, dass gemäß der vorliegenden Erfindung die Zentraleinheit für mehrere Betriebsgeräte gemeinsam vorgesehen ist, wobei die Zentraleinheit mit den Betriebsgeräten mittels wenigstens einem DC-Ausgangskreis verbunden ist.

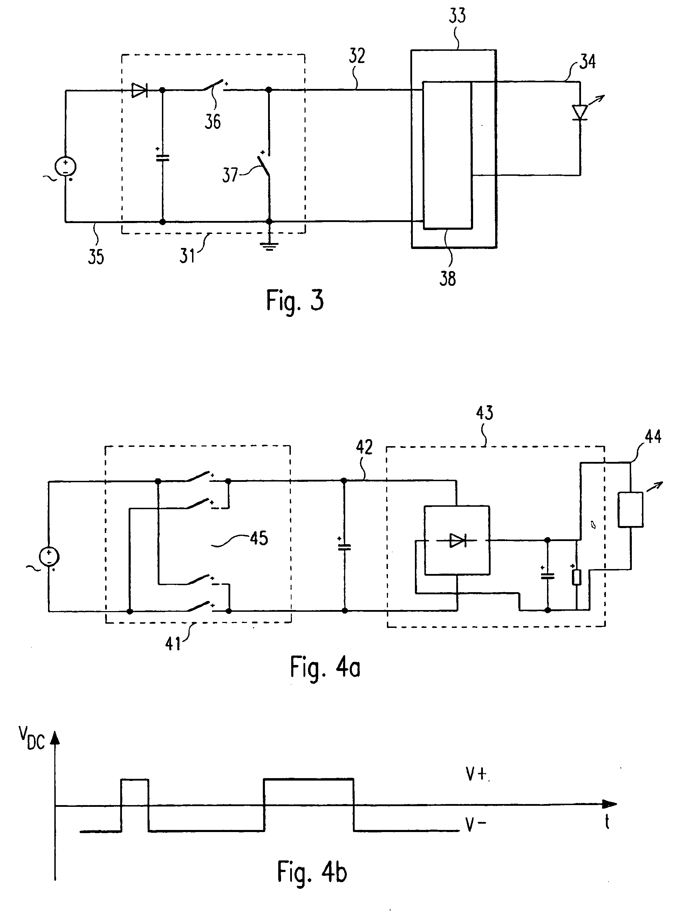

Fig. 3 zeigt schematisch eine zentrale Gleichrichtereinheit 31, die mit Wechselspannung 35 versorgt wird. Diese zentrale Gleichrichtereinheit 31 versorgt über wenigstens einen DC-Ausgangskreis (im folgenden DC-Bus) wenigstens ein Betriebsgerät 33 für Leuchtmittel 34. Dieses Betriebsgerät 33 kann beispielsweise ein elektronisches Vorschaltgerät (EVG) für Gasentladungslampen, oder aber auch ein Steuermodul für LEDs etc. sein. Einem Betriebsgerät können indessen auch andere licht- oder gebäudetechnische Einrichtungen, wie bspw. Bewegungsmelder oder andere aktive oder passive Sensoren zugeordnet sein.

Wie durch die Schalter 36, 37 schematisch dargestellt ist, kann die DC-Spannung des Busses 32 verändert, insbesondere wie in Fig. 3 dargestellt, von einem definierten DC-Pegel auf Null bzw. umgekehrt geschaltet werden. Die Schalter können beispielsweise Leistungstransistoren sein.

Wie im folgenden im Detail erläutert werden wird, kann aber auch allein der Spannungspegel und/oder das Vorzeichen (Polarität) der Spannung des DC-Busses 32 durch die zentrale Gleichrichtereinheit 31 eingestellt (geschaltet) werden.

In dem Betriebsgerät 33 für die Leuchtmittel 34 ist eine Schnittstelle mit Steuereinheit 38 vorgesehen, die die Schaltvorgänge bzgl. der DC-Spannung auswertet (decodiert), als Signale von der zentralen Gleichrichtereinheit 31 her interpretiert und dementsprechend beispielsweise mittels eienr lokalen Steuereinheit in dem Betriebsgerät das angeschlossene Leuchtmittel in einen durch den Steuerbefehl vorgegebenen Betriebszustand (Ein, Aus, Dimmen, Start etc.) versetzt.

Vorteilhafterweise erfolgt das Schalten des Pegels des DC-Busses in diskreten Stufen, so dass die lokale Steuereinheit (Logik) 38 in einem an dem DC-Bus angeschlossenen Betriebsgerät 33 für Leuchtmittel 34 diese diskreten Schaltstufen leicht als digitale Schaltbefehle interpretieren kann.

Durch eine diskrete oder kontinuierliche Änderung der (externen) DC-Busspannung kann aber auch analog beispielsweise ein Dimmen der an das Betriebsgerät 33 angeschlossenen Leuchtmittel 34 erzielt werden. Dies entspricht im wesentlichen einem Dimmen von Gasentladungslampen über die interne Bussspannung zwischen dem Glecihrichter und einem Wechselrichter in einem elektronischen Vorschaltgerät (EVG) für Gasentladungslampen.

Falls das Schalten zur Erzeugung digitaler Steuerbefehle dient, kann die Bedeutung der Steuerbefehle beispielsweise durch Schaltvorgänge, die Phasenlage und/oder die Frequenz des Schaltens der Spannung des DC-Busses 32 kodiert sein. Beispielsweise durch die Phasenlage und/oder die Frequenz des Schaltens kann aber auch eine Adressierung eines vorbestimmten Steuerbefehls an ein bzw. eine Gruppe von Betriebsgeräten 33 erfolgen. Selbstverständlich kann die Adressierung eines Steuerbefehls in einfacher Weise auch erzielt werden, wenn in einer Stern-Topologie die zentrale Gleichrichtereinheit 31 mehrere DC-Ausgangskreise 32 bedient, an denen jeweils ein oder eine Gruppe von Betriebsgeräten angeschlossen ist. Falls nicht zusätzlich die einzelnen Steuerbefehle adressiert sind, werden also bei der Stern-Bustopologie alle an einem DC-Ausgangskreis angeschlossenen Betriebsgeräte in gleicher Weise angesprochen.

In Fig. 4a ist ein Ausführungsbeispiel dargestellt, bei dem die Polung der DC-Spannung des Ausgangskreises 42 umgekehrt werden kann. Dementsprechend ist in der zentralen Gleichrichtereinheit 41 eine Vollbrücken-Endstufe 45 vorgesehen, die die Polung einer bereits gleichgerichteten Wechselspannung umkehren kann. Diese Vollbrücken-Endstufe 45 weist in an sich bekannter Weise vier Leistungsschalter (bspw. FETs) auf.

Fig. 4b zeigt ein Beispiel für den zeitlichen Verlauf der DC-Busspannung, die also zwischen einem ersten Pegel +V und eine zweiten Pegel -V umgeschaltet werden kann. Dieses bipolare Schalten eignet sich in besonderer Weise für die Übertragung digitaler Steuerbefehle.

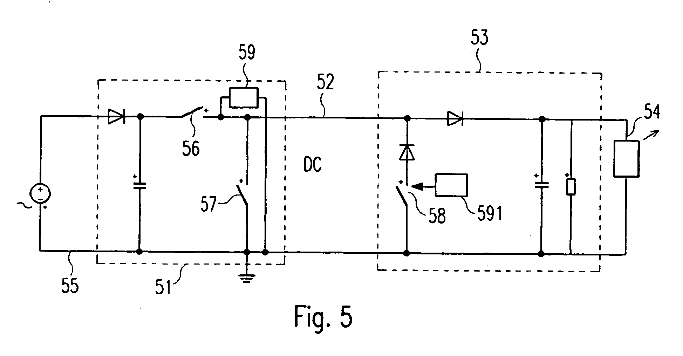

Fig. 5 zeigt ein Ausführungsbeispiel, bei dem alternativ oder zusätzlich zu der Signalübertragung mittels Schaltmodulation des DC-Busses 52 von der zentralen Gleichrichtereinheit 51 hin zu dem Betriebsgerät 53 für Leuchtmittel 54 auch ein Rücksignalisierungskanal von diesem Betriebsgerät 53 zu der zentralen Gleichrichtereinheit 51 und/oder an weitere an dem DC-Bus 52 angeschlossene Geräte vorgesehen ist.

Diese zentrale Gleichrichtereinheit 51 weist ebenfalls eine schaltbare Endstufe mit Schaltern 56, 57 auf, um den Werde der Spannung des DC-Busses 52 zu verändern

In dem Betriebsgerät 53 für Leuchtmittel 54 ein bspw. mittels eines Leistungstransistors schaltbarer Lastkreis 58 vorgesehen. Durch gezieltes Schalten des Lastkreises 58 ausgehend von einer Steuereinheit (bspw. ein ASIC) 591 in dem Betriebsgerät 53 kann also ausgehend von dem Betriebsgerät 53 gezielt der Lastzustand des DC-Busses 52 verändert werden. Die Zustandsänderung des DC-Busses 52 kann wiederum von einer Überwachungsschaltung 59 in der zentralen Gleichrichtereinheit 51 erfasst werden. Eine entsprechende Vorab-Absprache kann die Änderung des Lastverhaltens des Betriebsgeräts 53 durch die Überwachungsschaltung 59 der zentralen Gleichrichtereinheit 51 als Rücksignalisierung, d.h. als Signalübertragung von dem Betriebsgerät 53 zu der zentralen Gleichrichtereinheit 51 interpretiert werden. Diese Signale können beispielsweise Fehler- oder Betriebszustandsmeldungen von dem Betriebsgerät 53 sein.

Auch diese Rücksignalisierungsbefehle können zur Herkunfts-Identifikation bzw. für die Kennzeichnung der Art der übermittelten Meldungen beispielsweise durch die Phasenlage und/oder die Frequenz der Last-Zustandsänderungen des Betriebsgeräts 53 kodiert sein.

Alternativ kann auch vorgesehen sein, dass gemäß einem Master/Slave-Prinzip die Rücksignalisierung durch Lastzustandsänderung eines Betriebsgeräts 53 für Leuchtmittel 54 nur auf entsprechende Abfrage ausgehend von der zentralen Gleichrichtereinheit 51 hin erfolgt.

Es ist anzumerken, dass in Figuren 3, 4 und 5 jeweils nur die Ausgangsstufe (Endstufe) der zentralen Gleichrichtereinheit dargestellt ist, die den Pegel einer ihr zugeführten Gleichspannung schaltet. Selbstverständlich kann auch diese zentrale Gleichrichtereinheit beispielsweise eine Leistungsfaktor-Korrekturschaltung (PFC, Power Factor Correction) und andere Schaltungen aufweisen, die üblicherweise verwendet werden, um aus einer zugeführten Netzspannung eine DC-Spannung unter Einhaltung üblicher Bestimmungen bspw. bezüglich der Oberwellen des Eingagsstroms zu erzeugen.

Auch wenn im obigen von einer Codierung von Befehlen durch die Phasenlage bzw. die Frequenz von Umschaltvorgängen die Rede war, ist zu verstehen, dass durch die Schaltvorgänge selbst bzw. die Umpolung der Busspannung die Information kodiert werden kann.

Für die Bereitstellung eines Rücksignalisierungskanals durch Änderung des Lastverhaltens von Betriebsgeräten an dem DC-Bus ist es weiterhin vorteilhaft, wenn die Spannung, der Strom und/oder die Leistung des DC-Busses von der zentralen Gleichrichtereinheit geregelt sind.

## Patentansprüche

1. System zur zentralen Steuerung von Betriebsgeräten für Leuchtmittel, aufweisend:
- eine zentrale mit Wechselspannung (35) versorgte Gleichrichtereinheit (31),
- wenigstens ein Betriebsgerät (33) für Leuchtmittel (34), und
- einen externen DC-Bus (32), der ausgehend von der zentralen Gleichrichtereinheit (31) das wenigstens eine Betriebsgerät (33) für Leuchtmittel (34) mit Spannung versorgt,
wobei die zentrale Gleichrichtereinheit (31) eine Funktion zum Schalten des DC-Busses (32) auf wenigstens zwei unterschiedliche Werte aufweist, wobei das Schalten des DC-Busses (32) in diskreten Stufen erfolgt und eine Logikeinheit (38) in dem Betriebsgerät (33) dazu ausgelegt ist, das Schalten als digitale Steuerinformation von der zentralen Gleichrichtereinheit (31) zu interpretieren.

2. System nach Anspruch 1,
**dadurch gekennzeichnet,**
**dass** durch Änderung der Busspannung ein Dimmen der an das Betriebsgerät (33) angeschlossenen Leuchtmittel (34) erzielt wird.

3. System nach einem der vorhergehenden Ansprüche,
**dadurch gekennzeichnet,**
**dass** der Betrag der DC-Busspannung und/oder die Polung der DC-Busspannung schaltbar ist.

4. System nach Anspruch 3,
**dadurch gekennzeichnet,**
**dass** ein digitaler Steuerbefehl durch die Phasenlage und/oder die Frequenz des Schaltens codiert ist.

5. System nach Anspruch 4,
**dadurch gekennzeichnet,**
**dass** die Adressierung eines Steuerbefehls an ein oder eine Gruppe von Betriebsgeräten durch die Phasenlage und/oder die Frequenz des Schaltens codiert ist.

6. System nach einem der Ansprüche 3 bis 5,
**dadurch gekennzeichnet,**
**dass** die DC-Busspannung ein- und ausschaltbar ist.

7. System nach einem der vorhergehenden Ansprüche,
**dadurch gekennzeichnet,**
**dass** eine Rücksignalisierung von einem Betriebsgerät (33) zu der zentralen Gleichrichtereinheit (31) durch gezielte Änderung des Lastverhaltens des Betriebsgeräts (33) erzielbar ist.

8. System nach Anspruch 7,
**dadurch gekennzeichnet,**
**dass** das Betriebsgerät (33) einen schaltbaren Lastkreis aufweist, um somit durch Änderung des Lastverhaltens die Rücksignalisierung zu der zentralen Gleichrichtereinheit (31) zu erreichen.

9. System nach einem der vorhergehenden Ansprüche,
**dadurch gekennzeichnet,**
**dass** die zentrale Gleichrichtereinheit (41) eine Vollbrückenschaltung (45) aufweist, um DC-Busspannungen unterschiedlicher Polung bereitzustellen.

10. System nach einem der vorhergehenden Ansprüche,
**dadurch gekennzeichnet,**
**dass** das Betriebsgerät ein elektronisches Vorschaltgerät für Gasentladungslampen ist.

11. System nach einem der vorhergehenden Ansprüche,
**dadurch gekennzeichnet,**
**dass** die zentrale Gleichrichtereinheit eine Leistungsfaktor-Korrekturschaltung aufweist.

12. Verfahren zur zentralen Steuerung von Betriebsgeräten für Leuchtmittel, unter Verwendung:
- einer zentralen mit Wechselspannung versorgte Gleichrichtereinheit,
- wenigstens eines Betriebsgeräts für Leuchtmittel, und
- eines DC-Bus, der ausgehend von der zentralen Gleichrichtereinheit das wenigstens eine Betriebsgerät für Leuchtmittel mit Spannung versorgt,
wobei die zentrale Gleichrichtereinheit zur Übermittlung von Steuerinformation den Wert der Spannung des DC-Busses auf einen von wenigstens zwei verfügbaren unterschiedlichen Werte schaltet.

13. Verfahren nach Anspruch 12,
**dadurch gekennzeichnet,**
**dass** das Schalten des DC-Busses in diskreten Stufen erfolgt und durch das Betriebsgerät als digitale Steuerinformation von der zentralen Gleichrichtereinheit interpretiert wird.

14. Verfahren nach Anspruch 13,
**dadurch gekennzeichnet,**
**dass** durch Änderung der Busspannung ein Dimmen der an das Betriebsgerät angeschlossenen Leuchtmittel erzielt wird.

15. Verfahren nach einem der Ansprüche 13 oder 14,
**dadurch gekennzeichnet,**
**dass** der Betrag der DC-Busspannung und/oder die Polung der Dc-Busspannung geschaltet wird.

16. Verfahren nach Anspruch 15,
**dadurch gekennzeichnet,**
**dass** ein digitaler Steuerbefehl durch die Phasenlage und/oder die Frequenz des Schaltens codiert wird.

17. Verfahren nach Anspruch 16,
**dadurch gekennzeichnet,**
**dass** die Adressierung eines Steuerbefehls an ein oder eine Gruppe von Betriebsgeräten durch die Phasenlage und/oder die Frequenz des Schaltens codiert wird.

18. Verfahren nach einem der Ansprüche 15 bis 17,
**dadurch gekennzeichnet,**
**dass** die DC-Busspannung ein- und aus geschaltet wird.

19. Verfahren nach einem der Ansprüche 12 bis 18,
**dadurch gekennzeichnet,**
**dass** eine Rückübertragung von Signalen von einem Betriebsgerät zu der zentralen Gleichrichtereinheit durch gezielte Änderung des Lastverhaltens des
Betriebsgeräts erfolgt.

20. Verfahren nach Anspruch 19,
**dadurch gekennzeichnet,**
**dass** das Betriebsgerät durch Schalten eines internen Lastkreises eine Änderung des Lastverhaltens und somit eine Rücksignalisierung zu der zentralen Gleichrichtereinheit ausführt.

21. Verfahren nach einem der Ansprüche 12 bis 20,
**dadurch gekennzeichnet,**
**dass** die zentrale Gleichrichtereinheit mittels einer Vollbrückenschaltung DC-Busspannungen unterschiedlicher Polung bereitstellt.

22. Computersoftware-Programmprodukt,
**dadurch gekennzeichnet,**
**dass** es ein Verfahren nach einem der Ansprüche 12 bis 21 unterstützt, wenn es auf einem Prozessor in einem Beleuchtungssteuerungssystem läuft.

## Claims

1. System for the central control of operating devices for illumination means, having:
- a central rectifier unit (31) supplied with a.c. voltage (35),
- at least one operating device (33) for illumination means (34), and
- an external DC bus (32) which, starting from the central rectifier unit (31), supplies at least one operating device (33) for illumination means (34) with voltage,
wherein the central rectifier unit (31) has a function for switching the DC bus (32) to at least two different values, wherein the switching of the DC bus (32) is effected in discreet steps and a logic unit (38) in the operating device (33) is configured to interpret the switching as digital control information from the central rectifier unit (31).

2. System according to claim 1,
**characterised in that**,
by change of the bus voltage a dimming of the illumination means (34) connected to the operating device (33) is attained.

3. System according to any preceding claim,
**characterised in that**,
the magnitude of the DC bus voltage and/or the polarity of the DC bus voltage is switchable.

4. System according to claim 3,
**characterised in that**,
a digital control command is coded by the phase disposition and/or the frequency of the switching.

5. System according to claim 4,
**characterised in that**,
the addressing of a control command to one or a group of operating devices is coded by the phase disposition and/or the frequency of the switching.

6. System according to any of claims 3 to 5,
**characterised in that**,
the DC bus voltage can be switched on and can be switched off.

7. System according to any preceding claim,
**characterised in that**,
a return signalling from an operating device (33) to the central rectifier unit (31) is attainable by means of a purposive change of the load behaviour of the operating device (33).

8. System according to claim 7,
**characterised in that**,
the operating device (33) has a switchable load circuit, in order thus by means of change of the load behaviour to achieve the return signalling to the central rectifier unit (31).

9. System according to any preceding claim,
**characterised in that**,
the central rectifier unit (41) has a full bridge circuit (45) to provide DC bus voltages of different polarity.

10. System according to any preceding claim,
**characterised in that**,
the operating device is an electronic ballast for gas-discharge lamps.

11. System according to any preceding claim,
**characterised in that**,
the central rectifier unit has a power factor correction circuit.

12. Method for the central control of operating devices for illumination means, with the use of:
- a central rectifier unit supplied with a.c. voltage,
- at least one operating device for illumination means, and
- a DC bus which, starting from the central rectifier unit, supplies the at least one operating device for illumination means with voltage,
wherein for the transmission of control information the central rectifier unit switches the value of the voltage of the DC bus to one of at least two available different values.

13. Method according to claim 12,
**characterised in that**,
the switching of the DC bus is effected in discreet steps and by means of the operating device is interpreted as digital control information from the central rectifier unit.

14. Method according to claim 13,
**characterised in that**,
by change of the bus voltage a dimming of the illumination means connected to the operating device is attained.

15. Method according to any of claims 13 or 14,
**characterised in that**,
the magnitude of the DC bus voltage and/or the polarity of the DC bus voltage is switched.

16. Method according to claim 15,
**characterised in that**,
a digital control command is coded by the phase disposition and/or the frequency of the switching.

17. Method according to claim 16,
**characterised in that**,
the addressing of a control command to one or a group of operating devices is coded by the phase disposition and/or the frequency of the switching.

18. Method according to any of claims 15 to 17,
**characterised in that**,
the DC bus voltage is switched on and switched off.

19. Method according to any of claims 12 to 18,
**characterised in that**,
a return transmission of signals from an operating device to the central rectifier unit is effected by purposive change of the load behaviour of the operating device.

20. Method according to claim 19,
**characterised in that**,
the operating device carries out a change of the load behaviour, and thus a return signalling to the central rectifier unit, by means of switching of an internal load circuit.

21. Method according to any of claims 12 to 20,
**characterised in that**,
the central rectifier unit provides by means of a full bridge circuit DC bus voltages of different polarity.

22. Computer software programme product,
**characterised in that**,
it supports a method according to any of claims 12 to 21 when it runs on a processor in an illumination control system.

## Revendications

1. Système de commande centralisée d'appareils d'alimentation pour des moyens d'éclairage, présentant :
- une unité redresseur centrale (31) alimentée par un courant alternatif (35),
- au moins un appareil d'alimentation (33) pour moyen d'éclairage (34), et
- un bus externe à courant continu (32) qui alimente en tension l'appareil d'alimentation (33) pour moyen d'éclairage (34) en partant de l'unité redresseur centrale (31),
l'unité redresseur centrale (31) présente une fonction de commutation du bus à courant continu (32) entre au mois deux valeurs distinctes, la commutation du bus à courant continu (32) s'effectuant par seuils discrets et une unité logique (38) étant configuré dans l'appareil d'alimentation (33) pour interpréter la commutation comme information numérique de commande provenant de l'unité redresseur centrale (31).

2. Système selon la revendication 1,
**caractérisé en ce que** une réduction de l'intensité lumineuse du moyen d'éclairage (34) connecté à l'appareil d'alimentation (33) est obtenu par modification de la tension du bus.

3. Système selon l'un des revendications précédentes,
**caractérisé en ce que** la valeur de la tension du bus à courant continu et/ou la polarité de la tension du bus à courant continu est commutable.

4. Système selon la revendication 3,
**caractérisé en ce que** l'instruction numérique de commande est codée par la position de phase et/ou la fréquence de commutation.

5. Système selon la revendication 4,
**caractérisé en ce que** l'adressage d'une instruction de commande à un ou à un groupe d'appareils d'alimentation est codé par la position de phase et/ou la fréquence de commutation.

6. Système selon l'une des revendications 3 à 5,
**caractérisé en ce que** la tension du bus à courant continu peut être activée et désactivée.

7. Système selon l'une des revendications précédentes,
**caractérisé en ce qu'**une signalisation de retour peut être réalisé d'un appareil d'alimentation (33) vers l'unité redresseur centrale (31) par une modification ciblée du comportement de charge de l'appareil d'alimentation (33).

8. Système selon la revendication 7,
**caractérisé en ce que** l'appareil d'alimentation (33) présente un circuit de charge commutable, de façon à obtenir la signalisation de retour vers l'unité redresseur centrale (31) par modification du comportement de charge.

9. Système selon l'une des revendications précédentes,
**caractérisé en ce que** l'unité redresseur centrale (41) présente un pont en H (45) pour fournir des tensions de bus à courant continu ayant des polarités différentes.

10. Système selon l'une des revendications précédentes,
**caractérisé en ce que** l'appareil d'alimentation est un ballast électronique pour lampe à décharge de gaz.

11. Système selon l'une des revendications précédentes,
**caractérisé en ce que** l'unité redresseur centrale présente un circuit de correction du facteur de puissance.

12. Procédé pour commande centralisée d'appareils d'alimentation pour des moyens d'éclairage, utilisant:
- une unité redresseur centrale (31) alimentée par un courant alternatif (35),
- au moins un appareil d'alimentation (33) pour moyen d'éclairage (34), et
- un bus à courant continu (32) qui alimente en tension l'appareil d'alimentation (33) pour moyen d'éclairage (34) en partant de l'unité redresseur centrale (31),
où, pour transmettre une information de commande, l'unité redresseur centrale commute la valeur de la tension du bus à courant continu sur l'une d'au moins deux valeurs différentes disponibles.

13. Procédé selon la revendication 12,
**caractérisé en ce que** la commutation du bus à courant continu est effectuée par seuils discrets et est interprété par l'appareil d'alimentation comme une information numérique de commande provenant de l'unité redresseur centrale.

14. Procédé selon la revendication 13,
**caractérisé en ce que** une réduction de l'intensité lumineuse du moyen d'éclairage (34) connecté à l'appareil d'alimentation (33) est obtenu par modification de la tension du bus.

15. Procédé selon l'une des revendications 13 ou 14,
**caractérisé en ce que** la valeur de la tension du bus à courant continu et/ou la polarité de la tension du bus à courant continu est commutée.

16. Procédé selon la revendication 15,
**caractérisé en ce que** l'instruction numérique de commande est codée par la position de phase et/ou la fréquence de commutation.

17. Procédé selon la revendication 16,
**caractérisé en ce que** l'adressage d'une instruction de commande à un ou à un groupe d'appareils d'alimentation est codé par la position de phase et/ou la fréquence de commutation.

18. Procédé selon l'une des revendications 15 à 17,
**caractérisé en ce que** la tension du bus à courant continu est activée et désactivée.

19. Procédé selon l'une des revendications 15 à 18,
**caractérisé en ce qu'**une transmission en retour de signaux s'effectue d'un appareil d'alimentation (33) à l'unité redresseur centrale (31) par une modification ciblée du comportement de charge de l'appareil d'alimentation (33).

20. Procédé selon la revendication 19,
**caractérisé en ce que** l'appareil d'alimentation effectue une modification du comportement de charge et ainsi une signalisation de retour vers l'unité redresseur centrale par la commutation d'un circuit de charge interne.

21. Procédé selon l'une des revendications 12 à 20,
**caractérisé en ce que** l'unité redresseur centrale met à disposition des tensions de bus à courant continu ayant des polarités différentes via un pont en H.

22. Produit programme d'ordinateur,
**caractérisé en ce qu'**il soutient un procédé selon l'une des revendications 12 à 21 lorsqu'il est exécuté dans un processeur d'un système de commande d'éclairage.
